# EUROPÄISCHE PATENTSCHRIFT

(11) **EP 2 314 485 B1**
(45) Veröffentlichungstag und Bekanntmachung des Hinweises auf die Patenterteilung: **07.05.2014**
(21) Anmeldenummer: 10188111.8
(22) Anmeldetag: 19.10.2010
(51) Int. Cl.: B60R 25/0215

(54) **Vorrichtung zur Verlagerung einer verschiebbaren Sperreinheit**
Device for displacing a movable lock unit
Dispositif de logement d'une unité de verrouillage déplaçable

(30) Priorität: 21.10.2009 DE 102009045905
(43) Veröffentlichungstag der Anmeldung: 27.04.2011
(73) Patentinhaber: Huf Hülsbeck & Fürst GmbH & Co. KG, 42551 Velbert (DE)
(72) Erfinder: Zillmann, Horst, 81243, München (DE)
(74) Vertreter: Vogel, Andreas

(56) Entgegenhaltungen:
- EP-A1- 1 955 913
- DE-A1- 19 929 435
- DE-C1- 10 030 688
- GB-A- 2 401 594
- US-A1- 2004 148 983

## Beschreibung

Die Erfindung betrifft eine Vorrichtung zur Verlagerung einer verschiebbaren Sperreinheit eines funktionswesentlichen Bauteils, insbesondere einer Lenksäule eines Kraftfahrzeuges, mit einer mehrteilig ausgeführten Sperreinheit, die in einer Gehäuseführung gelagert ist, einem Antrieb, der mit der Sperreinheit derart in Wirkverbindung steht, dass die Sperreinheit zwischen einer Verriegelungsstellung und einer Entriegelungsstellung bewegbar ist, wobei in der Verriegelungsstellung die Sperreinheit mit einem Sperrelement in das funktionswesentliche Bauteil eingreift und in der Entriegelungsstellung das Sperrelement der Sperreinheit losgelöst vom funktionswesentlichen Bauteil ist.

In der US 2004/0148983A ist eine Vorrichtung zur Verlagerung einer verschiebbaren Sperreinheit einer Lenksäule gemäß Oberbegriff des Anspruchs 1 beschrieben.

In der DE 10 2004 001 511 A1 ist eine Vorrichtung zum Arretieren einer Lenksäule eines Kraftfahrzeuges beschrieben, wobei eine Sperreinheit vorgesehen ist, die aus einem Hubbolzen und einem Verriegelungsbolzen besteht. Ein Antrieb treibt den Hubbolzen an, wobei innerhalb des Hubbolzens der Verriegelungsbolzen beweglich geführt ist. In der Verriegelungsstellung greift der Verriegelungsbolzen in die Lenksäule des Kraftfahrzeuges arretierend ein. Einer der Nachteile dieser Vorrichtung ist, dass die Führungslänge des Verriegelungsbolzens gering ist, welches wiederum einen negativen Einfluss auf die Entriegelungsleistung der Gesamtvorrichtung hat.

Es ist Aufgabe der vorliegenden Erfindung, eine Vorrichtung der genannten Art zu schaffen, bei der die oben erwähnten Nachteile vermieden werden, insbesondere eine platzsparende Vorrichtung bereit gestellt wird, bei der hohe Kräfte zur Verschiebung des Sperrelementes bereitgestellt werden können.

Zur Lösung dieser Aufgabe wird eine Vorrichtung mit den Merkmalen des Anspruches 1 vorgeschlagen. In den abhängigen Ansprüchen sind bevorzugte Weiterbildungen ausgeführt.

Erfindungsgemäß ist vorgesehen, dass das Sperrelement in der Gehäuseführung geführt ist und innerhalb des Sperrelementes eine Führung ausgeführt ist, in der ein federbelastetes Koppelelement beweglich gelagert ist, das mit dem Antrieb verbunden ist, wobei die Führung des Sperrelementes als Aufnahmebohrung ausgebildet ist, die in jeder Position des Sperrelementes das Koppelelement komplett aufnimmt. Somit kann eine kompakte Gesamtkonstruktion erzielt werden. Das Koppelelement dient hierbei zur Kraftübertragung der vom Antrieb ausgehenden Kräfte, die auf das Sperrelement übertragen werden, insbesondere während der Verlagerung der Sperreinheit von der Entriegelungsstellung in die Verriegelungsstellung und umgekehrt.

Der wesentliche Kern dieser Erfindung ist, dass das erfindungsgemäße Sperrelement zum einen in der Verriegelungsstellung der Sperreinheit arretierend auf das funktionswesentliche Bauteil wirkt. Zum anderen wirkt das Sperrelement gleichzeitig als ein Hubelement der Sperreinheit, das durch den Antrieb aus einer ersten Position, in der die Sperreinheit in der Verriegelungsstellung sich befindet, in eine zweite Position, in der die Sperreinheit in der Entriegelungsstellung sich befindet, überführbar ist. Durch die Anordnung des Koppelelementes innerhalb des Sperrelementes wird eine Platz sparende Gesamtkonstruktion erzielt, wobei der Antrieb mit dem federbelasteten Koppelelement in Wirkverbindung steht. Da das Sperrelement in der Gehäuseführung linear beweglich geführt ist, kann eine lange Führung des Sperrelementes erzielt werden, wodurch gleichzeitig höhere Kräfte zur Verlagerung des Sperrelementes in seine jeweilige Position bereitgestellt werden können. Zweckmäßigerweise kann innerhalb der Führung des Sperrelementes ein Federelement angeordnet sein, das zur einen Seite das Koppelelement und zur anderen Seite das Sperrelement kontaktiert. Das Federelement kann möglicherweise eine Druckfeder sein, die beispielsweise aus einem Metall, insbesondere aus Stahl, besteht.

Es hat sich gezeigt, dass Situationen auftreten können, bei denen während des Verriegelungsvorganges, d. h. von der Überführung der Sperreinheit aus ihrer Entriegelungsstellung in die Verriegelungsstellung das funktionswesentliche Bauteil sich in einer gewissen Fehlstellung befinden kann, in der die Sperreinheit, insbesondere das Sperrelement nicht funktionsgerecht das funktionswesentliche Bauteil blockieren kann. Ist zum Beispiel das funktionswesentliche Bauteil eine Lenksäule eines Kraftfahrzeuges und die Sperreinheit kann während des Verriegelungsvorganges nicht ihre tatsächliche Verriegelungsstellung erreichen, da sich beispielsweise die Lenksäule in einer Fehlstellung befindet, bei der zum Beispiel das Sperrelement auf einen Zahn der Lenksäule trifft anstelle in die entsprechende Aufnahmeöffnung, bei der eine zuverlässige Blockierung der Lenksäule erzielt werden könnte, verbleibt das Sperrelement in einer gewissen Zwischenposition. Das Sperrelement ist innerhalb der Sperreinheit entlang der Gehäuseführung linear beweglich gelagert. In einer Fehlstellung des funktionswesentlichen Bauteils wird zwar die Sperreinheit über den Antrieb bewegt. Inwieweit eine Fehlstellung des funktionswesentlichen Bauteiles vorliegt oder nicht, ist für den Verschiebeweg des Sperrelementes jedoch nahezu unerheblich.

Das federbelastete Sperrelement erreicht jedoch bei einer Fehlstellung des funktionswesentlichen Bauteiles nicht seine eigentliche erste Position, bei der die Verriegelungsstellung der Sperreinheit erreicht ist. Das bedeutet, dass das Sperrelement mit einem wesentlichen Teil innerhalb des Gehäuses bzw. innerhalb der Gehäuseführung verbleibt, wobei das Sperrelement mit seinem freien Ende das sich in einer Fehlstellung befindende Bauteil kontaktiert. Die Sperreinheit einschließlich das federbelastete Sperrelement bilden eine Sicherheitseinheit, die es trotz einer Fehlstellung des funktionswesentlichen Bauteils ermöglicht, dass das Sperrelement kontrolliert aus der Gehäuseführung entsprechend gedrückt wird, ohne etwaige Materialzerstörungen auf Grund einer Fehlstellung des funktionswesentlichen Bauteils entstehen zu lassen. Das Federelement kann beispielsweise eine Druckfeder sein, die innerhalb der Führung des Sperrelementes sich befindet und sowohl auf das Koppelelement als auch auf das Sperrelement eine gewissen Federkraft ausübt.

In einer bevorzugten Ausführungsform der Erfindung kann die Führung des Sperrelementes als Aufnahmebohrung ausgebildet sein, die in jeder Position des Sperrelementes das Koppelelement komplett aufnimmt. Hierdurch wird eine platzsparende und kompakte Sperreinheit bereitgestellt, bei der hohe Belastungen auf das Sperrelement einwirken können. Das Koppelelement überträgt hierbei die vom Antrieb ausgehenden Kräfte auf das Sperrelement, insbesondere bei einer Verlagerung der Sperreinheit von der Entriegelungsstellung in die Verriegelungsstellung.

Besonders vorteilhaft ist, dass das vollständig innerhalb der Gehäuseführung liegende Sperrelement beweglich gelagert ist. Hierdurch hat sich gezeigt, dass das Sperrelement hohen Belastungen standhalten kann, insbesondere während des Wechsels zwischen der Verriegelungsstellung und der Entriegelungsstellung der Sperreinheit. Das Sperrelement erstreckt sich über die gesamte Länge der Gehäuseführung, wodurch das Sperrelement besonders geeignet ist hohe Drehmomente ohne Materialschädigung aufzunehmen.

In einer Ausführungsform ist es denkbar, dass das Sperrelement und das Koppelelement relativ bewegbar zueinander sind. Hierbei kann es ausreichen, dass das Koppelelement ein Bauteil aus Kunststoff ist, insbesondere ein Bauteil aus einem faserverstärkten Kunststoff.

Vorteilhafterweise wird der Antrieb beispielsweise über eine Steuerelektronik dann deaktiviert, falls die Sperreinheit, insbesondere das Sperrelement, seine jeweilige Position erreicht hat. Um dieses festzustellen kann eine Kontrolleinheit vorgesehen sein, die die jeweilige Stellung der Sperreinheit ermittelt. Hierbei kann die Kontrolleinheit ein Sensorelement aufweisen, das die Position des Sperrelementes delektiert. Das Sensorelement kann beispielsweise über eine definierte Änderung seiner elektrischen Eigenschaft, insbesondere der Induktivität, des Widerstandes oder der Kapazität ein Sensorsignal erzeugen, aus dem die jeweilige Stellung der Sperreinheit feststellbar ist. Hierbei kann das Sensorelement als ein Magnetfeldsensor, ein Drucksensor oder ein optischer Sensor ausgeführt sein. Es ist denkbar, dass das Sensorelement am Sperrelement und/oder am Gehäuse, insbesondere benachbart zur Sperreinheit, positioniert ist. Hat die Kontrolleinheit eine Verriegelungsstellung und/oder Entriegelungsstellung detektiert, wird der Antriebsmechanismus deaktiviert, sodass der Antrieb zum Stehen kommt. Über eine erneute Aktivierung des Antriebes kann die Sperreinheit in die entgegengesetzte Stellung wieder bewegt werden.

In einer denkbaren Ausführungsform kann eine Überwachungseinheit vorgesehen sein, die die Stellung der Sperreinheit und/oder die Position des Sperrelementes erkennt und/oder detektiert. Beispielsweise kann das Koppelelement einen aus dem Sperrelement herausragenden Arm aufweisen, der mit der Überwachungseinheit zusammen wirkt, insbesondere die Überwachungseinheit ein elektrisches Schaltelement ist, das durch den Arm aktivierbar ist, falls das Sperrelement seine erste Position und/oder seine zweite Position erreicht hat.

In einer bevorzugten Ausführungsform der Erfindung kann der Antrieb ein Steuerglied aufweisen, das um eine Drehachse bewegbar ist, wobei insbesondere das Steuerglied innenseitig mindestens eine Steuerfläche aufweist, wobei entlang der Steuerfläche die Sperreinheit in die Verriegelungsstellung und in die Entriegelungsstellung verlagerbar ist. Ferner ist es denkbar, dass das Steuerglied innenseitig einen Freiraum aufweist, in dem das Sperrelement zumindest teilweise hineinragt. Das Steuerglied bietet somit dem Sperrelement in Abhängigkeit von seiner Position die Möglichkeit, sich in den Freiraum bewegen zu können, wodurch eine platzsparende Sperreinheit erzielt werden kann.

In einer die Erfindung verbessernden Maßnahme kann das Koppelelement ein Verbindungsteil aufweisen, das an dem Steuerglied geführt ist. Vorteilhafterweise kann das Sperrelement mindestens eine Öffnung aufweisen, durch die das Koppelelement, insbesondere das Verbindungsteil ragt. Beispielsweise ist es denkbar, dass das Verbindungsteil ein Metallstift ist, der sich durch das Koppelelement erstreckt und jeweils mit seinen beiden Enden aus der Öffnung des Sperrelements herausragt und an der Steuerfläche anliegt.

Vorteilhafterweise kann das Sperrelement einen Anschlag aufweisen, an dem das Koppelelement während der Bewegung der Sperreinheit von der Verriegelungsstellung in die Entriegelungsstellung anliegt. Während der Verlagerung der Sperreinheit aus der Verriegelungsstellung in die Entriegelungsstellung ist es denkbar, dass das Verbindungsteil am Anschlag unmittelbar anliegt, wobei der Antrieb über das Verbindungsteil eine entsprechende Kraft auf das Sperrelement ausübt, die somit das Sperrelement in die zweite Position bewegt, bei der die Sperreinheit sich in der Entriegelungsstellung befindet.

Das Steuerglied kann außenseitig eine Antriebsseite und innenseitig eine Abtriebsseite aufweisen, wobei insbesondere die Antriebsseite eine Verzahnung aufweist, insbesondere die Verzahnung im Eingriff mit einem Schneckenrad eines elektrischen Motors steht.

Vorteilhafterweise kann vorgesehen sein, dass die Steuerfläche gewindeartig zur Drehachse des Steuergliedes verläuft, wobei insbesondere die Steuerfläche derart geometrisch ausgeführt ist, dass ein Freilauf des Antriebes in der Verriegelungsstellung und/oder der Entriegelungsstellung erzielbar ist. Somit kann ein Freilauf des Antriebes sowohl in der Verriegelungsstellung als auch in der Entriegelungsstellung erzielt werden. Der Antrieb kann derart ausgeführt sein, dass der Freilauf auch als unendlicher Freilauf wirken kann, das bedeutet, dass der Antrieb, insbesondere das Steuerglied, ohne abgeschaltet zu werden oder die Drehrichtung zu ändern auf die Sperreinheit wirken kann, die wiederum stets in der Verriegelungsstellung und/oder in der Entriegelungsstellung verbleibt. Somit können auch Motoren zur Ansteuerung des Steuergliedes zum Einsatz kommen, die lediglich mit einer sehr einfachen Motorsteuerung ausgestattet sind. Obwohl die Sperreinheit ihre Verriegelungsstellung und/oder ihre Entriegelungsstellung längst erreicht hat, kann der Motor ohne Probleme noch etwas nachlaufen. Dies gilt entsprechend für einen Vorlauf.

Weitere, die Erfindung verbessernde Maßnahmen werden nachstehend gemeinsam mit der Beschreibung eines bevorzugten Ausführungsbeispieles der Erfindung anhand der Figuren näher dargestellt. Es zeigen:

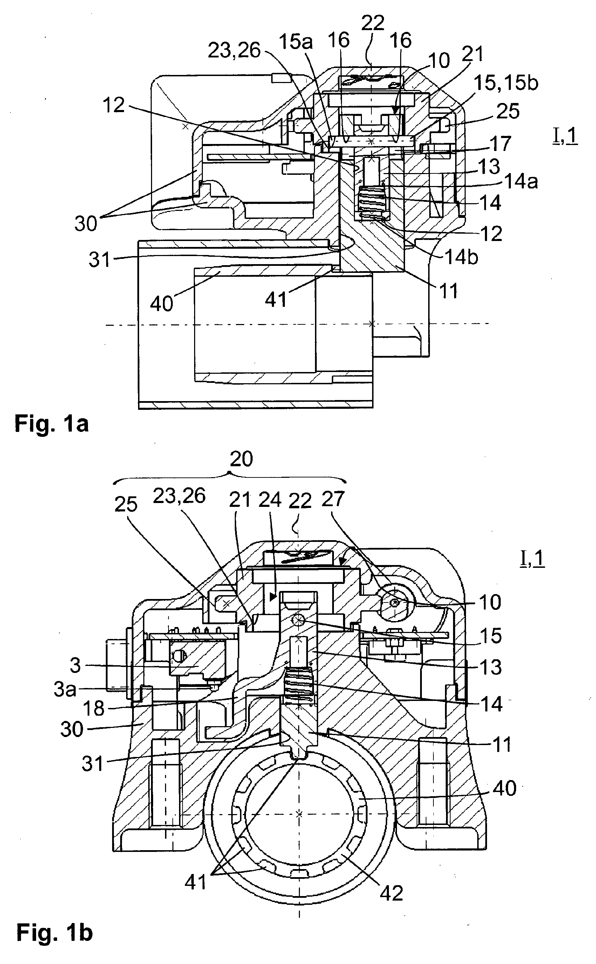

- Fig. 1a: die erfindungsgemäße Vorrichtung, bei der die Sperreinheit sich in einer Ver- riegelungsstellung befindet,
- Fig. 1 b: die Vorrichtung gemäß Figur 1a in einer weiteren Schnittansicht,
- Fig. 2a: die Vorrichtung gemäß Figur 1a, wobei sich die Sperreinheit zwischen der Verriegelungsstellung und der Entriegelungsstellung befindet,
- Fig. 2b: die Vorrichtung gemäß 2a in einer weiteren Schnittansicht,
- Fig. 3a: die Vorrichtung gemäß Figur 1a, wobei die Sperreinheit sich in der Entriege- lungsstellung befindet und
- Fig. 3b: die Vorrichtung gemäß Figur 3a in einer weiteren Schnittansicht.

Die Figuren 1a - 3b zeigen eine mögliche Ausführungsform einer Vorrichtung zur Verlagerung einer verschiebbaren Sperreinheit 10 eines funktionswesentlichen Bauteils 40, das im vorliegenden Fall eine Lenksäule 40 eines Kraftfahrzeuges ist. Die Vorrichtung weist einen Antrieb 20 auf, der ein Steuerglied 21 aufweist, das um eine Drehachse 22 bewegbar ist. Das Steuerglied 21 weist innenseitig zwei Steuerflächen 23 auf. Innenseitig ist das Steuerglied 21 mit einem Freiraum 24 ausgeführt. Zudem weist das Steuerglied 21 außenseitig eine Antriebsseite 25 auf. Innenseitig ist eine Abtriebsseite 26 ausgeführt, die die Steuerflächen 23 bildet. Die Antriebsseite 25 ist mit einer Verzahnung ausgeführt. Der Antrieb 20 ist des Weiteren mit einem Schneckenrad 27 vorgesehen, das im Eingriff mit der Verzahnung 25 steht. Das genannte Schneckenrad 27 wird über einen elektrischen Motor angetrieben, der nicht explizit dargestellt ist.

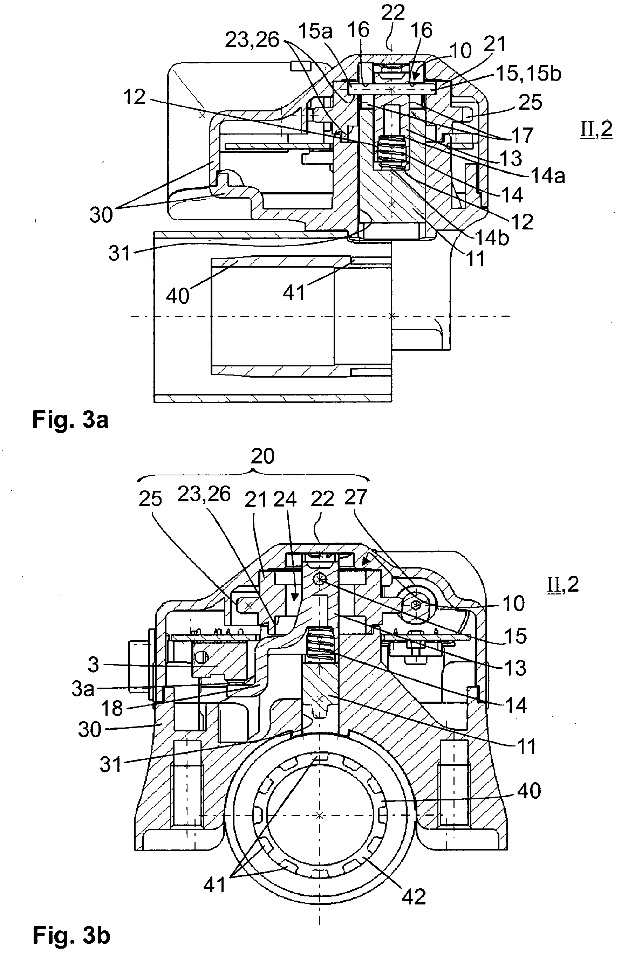

Gemäß der gezeigten Figuren ist die Sperreinheit 10 mehrteilig ausgeführt, die innerhalb einer Gehäuseführung 31 eines Gehäuses 30 beweglich gelagert ist. Der beschriebene Antrieb 20 steht dabei mit der Sperreinheit 10 derart in Wirkverbindung, dass die Sperreinheit 10 zwischen einer Verriegelungsstellung I, die in Figur 1a und 1b dargestellt ist, und einer Entriegelungsstellung II, die in Figur 3a und 3b dargestellt ist, bewegbar ist. Die Sperreinheit 10 weist ein Sperrelement 11 sowie ein Koppelelement 13 auf, wobei das Sperrelement 11 und das Koppelelement 13 relativ zueinander bewegbar sind. In der Verriegelungsstellung I befindet sich das Sperrelement 11 in seiner ersten Position 1, in der das Sperrelement 11 in die Lenksäule 40 arretierend eingreift. Hierbei ist die Lenksäule 40 drehbeweglich gesperrt, wobei im vorliegenden Ausführungsbeispiel das Sperrelement 11 in eine Öffnung 41 der Lenksäule 40 eingereift. Selbstverständlich sind aus dem Stand der Technik diverse alternative Lenksäulen 40 denkbar, die über ein bewegliches Sperrelement 11 arretiert werden können.

In Figur 3a und 3b weist das Sperrelement 11 einen definierten Abstand zur Lenksäule 40 auf, sodass die Lenksäule 40 durch den Benutzer bewegt werden kann.

Das Sperrelement 11 ist in der Gehäuseführung 31 geführt, wobei innerhalb des Sperrelementes 11 eine Führung 12 ausgeführt ist, in der das Koppelelement 13 beweglich gelagert ist. Das Koppelelement 13 ist über ein Verbindungsteil 15 mit dem Antrieb 20 in Wirkverbindung.

Innerhalb der Führung 12 des Sperrelementes 11 ist ein Federelement 14 angeordnet, das zu einer Seite 14a das Koppelelement 13 und zur anderen Seite 14b das Sperrelement 11 kontaktiert und auf beide genannten Elemente 11, 13 eine gewisse Federkraft ausübt. Die Führung 12 innerhalb des Sperrelementes 11 ist als eine Art Aufnahmebohrung ausgebildet, die in jeder Position 1,2 des Sperrelementes 11 komplett das Koppelelement 13 aufnimmt.

Im vorliegenden Ausführungsbeispiel ist das Koppelelement 13 ein Bauteil aus einem faserverstärkten Kunststoff. Das Verbindungsteil 15 ist als Metallstift ausgeführt, der sich durch das Koppelelement 13 erstreckt und jeweils mit seinen beiden Enden 15a, 15b aus dem Sperrelement 11 herausragt.

Das Steuerglied 21 ist mit zwei innenseitigen Steuerflächen 23 ausgeführt, wobei entlang jeder Steuerfläche 23 die Sperreinheit 10 in die Verriegelungsstellung 1 und/oder in die Entriegelungsstellung II verlagerbar ist. Die beiden Enden 15a, 15b des Verbindungsteils 15 liegen hierbei direkt an den Steuerflächen 23 an. Hierbei sind die Steuerflächen 23 gewindeartig zur Drehachse 22 des Steuergliedes 21 ausgeführt. Im vorliegenden Ausführungsbeispiel sind die Steuerflächen 23 derart geometrisch ausgeführt, dass ein Freilauf des Antriebes 20 in der Verriegelungsstellung I und in der Entriegelungsstellung II erzielbar ist. Das bedeutet, dass trotz eines Erreichens einer Verriegelungsstellung I oder einer Entriegelungsstellung II der elektrische Motor weiter betrieben werden kann, ohne dass das Sperrelement 11 seine erste Position 1 oder seine zweite Position 2 verlässt.

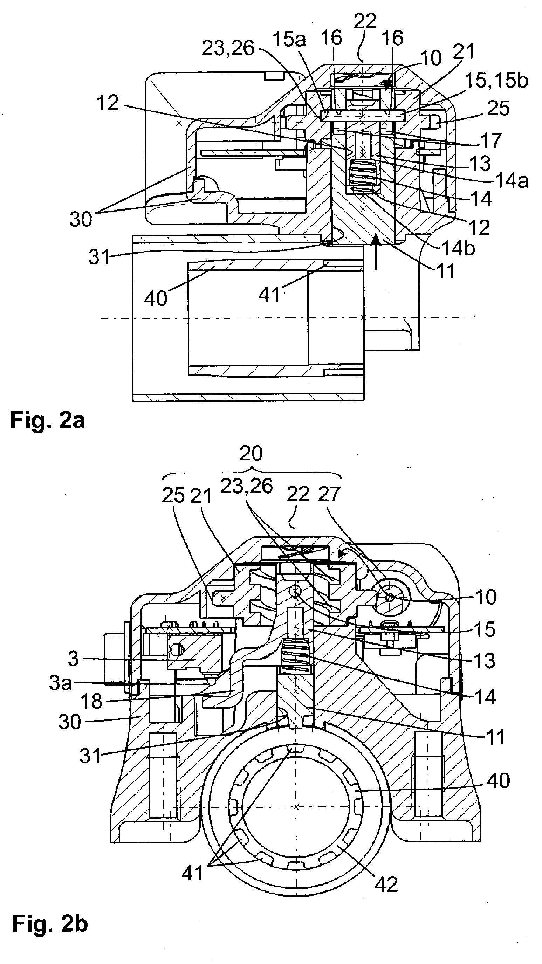

Wie in sämtlichen Figuren zu erkennen ist, sind zwei Öffnungen 17 am Sperrelement 11 angeordnet, durch die das Verbindungsteil 15 mit seinen beiden Enden 15a, 15b ragt. Diese Öffnungen 17 sind hierbei als Langlöcher ausgeführt. Am oberen Bereich der Öffnung 17 ist jeweils ein Anschlag 16 vorgesehen. Ausgehend von der Verriegelungsstellung I gemäß Figur 1a und Figur 1b erfolgt der Entriegelungsvorgang derart, dass beispielsweise über ein Signal der Antrieb 20 aktiviert wird. Hierbei wird über die Antriebsseite 25 das Steuerglied 21 um die Drehachse 22 in Rotation gebracht. Das Verbindungsteil 15 verfährt entlang der Steuerflächen 23, wodurch eine translatorische Hubbewegung der Sperreinheit 10 gemäß des dargestellten Pfeils gemäß Figur 2a erfolgt. Der Antrieb 20 übt hierbei eine nach oben gerichtete Kraft, die zur Lenksäule 40 entgegengesetzt ist, auf das Sperrelement 11 sowie auf das Koppelelement 13 aus. Während das Verbindungsteil 15 entlang der Steuerfläche 23 in Pfeilrichtung nach oben geführt wird, wobei die Enden 15a, 15b entlang der Kontur der Steuerflächen 23 entlangfahren, liegt das Verbindungsteil 15 an den zwei Anschlägen 16 an, wodurch das Sperrelement 11 translatorisch aus seiner ersten Position 1 in Richtung der zweiten Position 2 bewegt wird.

Gemäß der Figur 3a und Figur 3b befindet sich das Sperrelement 11 in seiner zweiten Position 2. Es kann nun der Fall eintreten, dass die Lenksäule 40 eine Fehlstellung einnimmt, bei der beispielsweise das freie Ende des Sperrelementes 11 nicht wie gewünscht in die Öffnung 41 der Lenksäule eindringt, sondern auf den Zahn 42 aufschlägt, sodass eine Verriegelungsstellung I der Sperreinheit 10 zunächst nicht bewirkt werden kann. In diesem Fall ist die Vorrichtung derart ausgeführt, dass das Federelement 14 innerhalb der Führung 12 angeordnet ist. Während des Verriegelungsvorganges bleibt der Antrieb 20 weiter aktiv, trotz einer Kontaktierung des Sperrelementes 11 mit dem Zahn 42. Hierbei durchläuft das Verbindungsteil 15 die Steuerflächen 23 des Steuergliedes 21, wobei das Koppelelement 13 in Richtung Lenksäule 40 sich linear weiter entlang der Führung 12 des Sperrelementes 11 bewegt. Das Sperrelement 11 jedoch verbleibt unbeweglich in seiner "Zwischenstellung", bei der es den Zahn 42 der Lenksäule 40 berührt.

Während der Bewegung des Koppelelementes 13 in Richtung Lenksäule 40 bewegt sich gleichzeitig das Verbindungsteil 15 entlang des Langloches 17 in Richtung Lenksäule 40, wobei das Verbindungsteil 15 den Kontakt mit den Anschlägen 16 verliert. Gleichzeitig wird das Federelement 14 gespannt, das gleichzeitig eine erhöhte Federkraft in Richtung Lenksäule 40 auf das Sperrelement 11 ausübt. Falls beispielsweise der Benutzer des Kraftfahrzeuges manuell eine entsprechende Bewegung der Lenksäule 40 zur Aufhebung der Fehlstellung ausführt, bewirkt die Kraft der Feder 14, dass das Sperrelement 11 sich automatisch in die Öffnung 41 der Lenksäule 40 verschiebt und einrastet und somit die gewünschte Verriegelungsstellung I erreicht wird. Das Sperrelement 11 liegt entlang der gesamten Gehäuseführung 31 an. Hierbei ist das Sperrelement 11 zylinderartig ausgeführt, wobei im Innern des Sperrelementes 11 das genannte Koppelelement 13 beweglich geführt ist, wodurch eine kompakte Gesamtkonstruktion erzielbar ist. Durch die langen Führungsflächen der Gehäuseführung 31 können zudem hohe Belastungen während der Verlagerung der Sperreinheit 10 zwischen der Verriegelungsstellung I und der Entriegelungsstellung II am Sperrelement 11 ohne eine mögliche Materialzerstörung gewährleistet werden.

Die dargestellte Vorrichtung kann durch eine Steuerelektronik überwacht werden, die beispielsweise Fahrzeugsseitig angeordnet sein kann. Aus sicherheitstechnischen Gründen kann es vorteilhaft sein, neben der Erfassung des Drehweges oder Drehwinkels des Steuergliedes 21 auch bestimmte Positionen der Sperreinheit 10, insbesondere des Sperrelementes 11 über ein Sensorelement zu erfassen. Im gezeigten Ausführungsbeispiel weist die Vorrichtung eine Überwachungseinheit 3 auf, die die Stellung I, II der Sperreinheit 10 und somit die Position 1,2 des Sperrelementes 11 detektiert. Hierbei weist das Koppelelement 13 einen aus dem Sperrelement 11 herausragenden Arm 18 auf. Das Sperrelement 11 ist mit einer weiteren Öffnung ausgeführt, die zur Öffnung 17 versetzt angeordnet ist. Durch diese weitere Öffnung erstreckt sich der Arm 18. Gemäß Figur 1b weist das freie Ende des Armes 18 einen definierten Abstand zur Überwachungseinheit 3 auf, wobei die Überwachungseinheit 3 ein elektrisches Schaltelement 3a aufweist. Das freie Ende des Armes 18 befindet sich unterhalb des elektrischen Schaltelementes 3a. Bei einer Verlagerung des Sperrelementes 11 in die zweite Position 2 nähert sich das freie Ende des Armes 18 dem elektrischen Schaltelementes 3a, wobei in der zweiten Position 2 das freie Ende des Armes 18 das elektrische Schaltelement 3b kontaktiert und aktiviert, welches in Figur 3b gezeigt ist. Bei der Aktivierung des elektrischen Schaltelementes 3a erkennt die Überwachungseinheit 3, dass die Entriegelungsstellung II der Sperreinheit 10 erreicht ist.

Der Einsatz des elektrischen Motors in Kombination mit dem Schneckenrad 27 begünstigt, dass hohe Drehmomente auf das Steuerglied 21 übertragen werden können. Ein weiterer Vorteil ist, dass durch das Schneckenrad 27 der Antrieb 20 selbsthemmend ausgeführt ist.

### Bezugszeichenliste

- I: Verriegelungsstellung
- II: Entriegelungsstellung
- 1: erste Position des Sperrelementes
- 2: zweite Position des Sperrelementes
- 3: Überwachungseinheit
- 3a: Schaltelement
- 10: Sperreinheit
- 11: Sperrelement
- 12: Führung des Sperrelementes
- 13: Koppelelement
- 14: Federelement
- 14a: erste Seite des Federelementes
- 14b: zweite Seite des Federelementes
- 15: Verbindungsteil
- 15a: erstes Ende des Verbindungsteils
- 15b: zweites Ende des Verbindungsteils
- 16: Anschlag
- 17: Öffnung, Langloch
- 18: Arm
- 20: Antrieb
- 21: Steuerglied
- 22: Drehachse
- 23: Steuerfläche
- 24: Freiraum
- 25: Antriebsseite, Verzahnung
- 26: Abtriebsseite
- 27: Schneckenrad
- 30: Gehäuse
- 31: Gehäuseführung
- 40: Lenksäule
- 41: Öffnung
- 42: Zahn

## Patentansprüche

1. Vorrichtung zur Verlagerung einer verschiebbaren Sperreinheit (10) eines funktionswesentlichen Bauteils (40), insbesondere einer Lenksäule (40) eines Kraftfahrzeuges, mit einer mehrteilig ausgeführten Sperreinheit (10), die in einer Gehäuseführung (31) gelagert ist,
einem Antrieb (20), der mit der Sperreinheit (10) derart in Wirkverbindung steht, dass die Sperreinheit (10) zwischen einer Verriegelungsstellung (I) und einer Entriegelungsstellung (II) bewegbar ist, wobei
in der Verriegelungsstellung (I) die Sperreinheit (10) mit einem Sperrelement (11) in das funktionswesentliche Bauteil (40) eingreift und
in der Entriegelungsstellung (II) das Sperrelement (11) der Sperreinheit (10) losgelöst vom funktionswesentlichen Bauteil (40) ist,
**dadurch gekennzeichnet,**
**dass** das Sperrelement (11) in der Gehäuseführung (31) geführt ist und innerhalb des Sperrelementes (11) eine Führung (12) ausgeführt ist, in der ein federbelastetes Koppelelement (13) beweglich gelagert ist, das mit dem Antrieb (20) verbunden ist, wobei die Führung (12) des Sperrelementes (11) als Aufnahmebohrung (12) ausgebildet ist, die in jeder Position (1,2) des Sperrelementes (11) komplett das Koppelelement (13) aufnimmt.

2. Vorrichtung nach Anspruch 1,
**dadurch gekennzeichnet,**
**dass** innerhalb der Führung (12) des Sperrelementes (11) ein Federelement (14) angeordnet ist, das zur einen Seite das Koppelelement (13) und zur anderen Seite das Sperrelement (11) kontaktiert.

3. Vorrichtung nach einem der vorhergehenden Ansprüche,
**dadurch gekennzeichnet,**
**dass** vollständig innerhalb der Gehäuseführung (31) das Sperrelement (11) beweglich gelagert ist.

4. Vorrichtung nach einem der vorhergehenden Ansprüche,
**dadurch gekennzeichnet,**
**dass** das Sperrelement (11) und das Koppelelement (13) relativ zueinander bewegbar sind.

5. Vorrichtung nach einem der vorhergehenden Ansprüche,
**dadurch gekennzeichnet,**
**dass** das Koppelelement (13) ein Bauteil aus Kunststoff ist, insbesondere ein Bauteil aus einem faserverstärkten Kunststoff ist.

6. Vorrichtung nach einem der vorhergehenden Ansprüche,
**dadurch gekennzeichnet,**
**dass** eine Überwachungseinheit (3) vorgesehen ist, die die Stellung (I, II) der Sperreinheit (10) und/oder die Position (1,2) des Sperrelementes (11) detektiert.

7. Vorrichtung nach einem der vorhergehenden Ansprüche,
**dadurch gekennzeichnet,**
**dass** der Antrieb (20) ein Steuerglied (21) aufweist, das um eine Drehachse (22) bewegbar ist, wobei insbesondere das Steuerglied (21) innenseitig mindestens eine Steuerfläche (23) aufweist, wobei entlang der Steuerfläche (23) die Sperreinheit (10) in die Verriegelungsstellung (I) und in die Entriegelungsstellung (II) verlagerbar ist, wobei insbesondere das Steuerglied (21) innenseitig einen Freiraum (24) aufweist, in den zumindest teilweise das Sperrelement (11) hineinragt.

8. Vorrichtung nach einem der vorhergehenden Ansprüche,
**dadurch gekennzeichnet,**
**dass** das Koppelelement (13) ein Verbindungsteil (15) aufweist, das an dem Steuerglied (21) geführt ist.

9. Vorrichtung nach einem der vorhergehenden Ansprüche,
**dadurch gekennzeichnet,**
**dass** das Sperrelement (11) einen Anschlag (16) aufweist, an dem das Koppelelement (13) während der Bewegung der Sperreinheit (10) von der Verriegelungsstellung (I) in die Entriegelungsstellung (II) anliegt und/oder dass das Sperrelement (11) zylinderartig ausgeführt ist.

10. Vorrichtung nach einem der vorhergehenden Ansprüche,
**dadurch gekennzeichnet,**
**dass** das Sperrelement (11) mindestens eine Öffnung (17) aufweist, durch die das Koppelelement (13), insbesondere das Verbindungsteil (15) ragt.

11. Vorrichtung nach einem der vorhergehenden Ansprüche,
**dadurch gekennzeichnet,**
**dass** das Steuerglied (21) außenseitig eine Antriebseite (25) und innenseitig eine Abtriebsseite (26) aufweist, wobei insbesondere die Antriebsseite (25) eine Verzahnung (25) aufweist, insbesondere die Verzahnung (25) im Eingriff mit einem Schneckenrad (27) eines elektrischen Motors ist.

12. Vorrichtung nach einem der vorhergehenden Ansprüche,
**dadurch gekennzeichnet,**
**dass** das die Steuerfläche (23) gewindeartig zur Drehachse (22) des Steuergliedes (21) verläuft, wobei insbesondere die Steuerfläche (23) derart geometrisch ausgeführt ist, das ein Freilauf des Antriebes in der Verriegelungsstellung (I) und/oder der Entriegelungsstellung (II) erzielbar ist.

13. Vorrichtung nach einem der vorhergehenden Ansprüche,
**dadurch gekennzeichnet,**
**dass** das Steuerglied (21) zwei Steuerflächen (23) aufweist und/oder dass das Verbindungsteil (15) ein Metallstift (15) ist, der sich durch das Koppelelement (13) erstreckt und jeweils mit seinen beiden Enden (15a, 15b) aus der Öffnung (17) des Sperrelements (11) herausragt und an der Steuerfläche (23) anliegt.

14. Vorrichtung nach einem der vorhergehenden Ansprüche,
**dadurch gekennzeichnet,**
**dass** das Koppelelement (13) einen aus dem Sperrelement (11) herausragenden Arm (18) aufweist, der mit der Überwachungseinheit (3) zusammenwirkt, insbesondere die Überwachungseinheit (3) ein elektrisches Schaltelement (3a) ist, das durch den Arm (18) aktivierbar ist.

## Claims

1. A device for displacing a movable locking unit (10) of a functionally essential component (40), in particular a steering column (40) of a motor vehicle, with a locking unit (10) embodied in several parts, which is mounted in a housing guide (31),
with a drive (20), which is in operative connection with the locking unit (10) such that the locking unit (10) is movable between a locking position (I) and an unlocking position (II), wherein
in the locking position (I) the locking unit (10) engages with a locking element (11) into the functionally essential component (40) and
in the unlocking position (II) the locking element (11) of the locking unit (10) is released from the functionally essential component (40),
**characterized in that**
the locking element (11) is guided in the housing guide (31) and a guide (12) is embodied inside the locking element (11), in which guide a spring-loaded coupling element (13) is movably mounted, which is connected with the drive (20), wherein the guide (12) of the locking element (11) is configured as a receiving bore (12), which completely receives the coupling element (13) in each position (1, 2) of the locking element (11).

2. The device according to Claim 1,
**characterized in that**
a spring element (14) is arranged inside the guide (12) of the locking element (11), which spring element on one side contacts the coupling element (13) and on the other side contacts the locking element (11).

3. The device according to one of the preceding claims,
**characterized in that**
the locking element (11) is mounted so as to be movable completely inside the housing guide (31).

4. The device according to one of the preceding claims,
**characterized in that**
the locking element (11) and the coupling element (13) are movable relative to one another.

5. The device according to one of the preceding claims,
**characterized in that**
the coupling element (13) is a component made from plastic, in particular a component made from a fibre-reinforced plastic.

6. The device according to one of the preceding claims,
**characterized in that**
a monitoring unit (3) is provided, which detects the position (I, II) of the locking unit (10) and/or the position (1, 2) of the locking element (11).

7. The device according to one of the preceding claims,
**characterized in that**
the drive (20) has a control member (21), which is movable about a rotation axis (22), wherein in particular the control member (21) has in the interior at least one control surface (23), wherein the locking unit (10) is movable along the control surface (23) into the locking position (I) and into the unlocking position (II), wherein in particular the control member (21) has in the interior a free space (24), into which the locking element (11) projects at least partially.

8. The device according to one of the preceding claims,
**characterized in that**
the coupling element (13) has a connecting part (15) which is guided on the control member (21).

9. The device according to one of the preceding claims,
**characterized in that**
the locking element (11) has a stop (16), against which the coupling element (13) lies during the movement of the locking unit (10) from the locking position (I) into the unlocking position (II) and/or that the locking element (11) is embodied in the manner of a cylinder.

10. The device according to one of the preceding claims,
**characterized in that**
the locking element (11) has at least one opening (17), through which the coupling element (13), in particular the connecting part (15), projects.

11. The device according to one of the preceding claims,
**characterized in that**
the control member (21) has on the exterior a drive side (25) and on the interior an output side (26), wherein in particular the drive side (25) has a toothing (25), in particular the toothing (25) is in engagement with a worm gear (27) of an electric motor.

12. The device according to one of the preceding claims,
**characterized in that**
the control surface (23) runs in the manner of a thread to the rotation axis (22) of the control member (21), wherein in particular the control surface (23) is embodied geometrically such that a free-running of the drive is able to be achieved in the locking position (I) and/or in the unlocking position (II).

13. The device according to one of the preceding claims,
**characterized in that**
the control member (21) has two control surfaces (23) and/or that the connecting part (15) is a metal pin (15), which extends through the coupling element (13) and projects respectively with its two ends (15a, 15b) out from the opening (17) of the locking element (11) and lies against the control surface (23).

14. The device according to one of the preceding claims,
**characterized in that**
the coupling element (13) has an arm (18) projecting out from the locking element (11), which arm cooperates with the monitoring unit (3), in particular the monitoring unit (3) is an electric switching element (3a), which is able to be activated by the arm (18).

## Revendications

1. Dispositif affecté au déplacement d'une unité mobile de blocage (10) d'une pièce structurelle (40) fonctionnellement essentielle, en particulier d'une colonne de direction (40) d'un véhicule automobile, comprenant
une unité de blocage (10) réalisée en plusieurs parties, montée dans un guide (31) ménagé dans un carter,
un entraînement (20) en liaison opérante avec l'unité de blocage (10), de façon telle que ladite unité de blocage (10) puisse être mue entre une position de verrouillage (I) et une position de déverrouillage (II), sachant que,
dans la position de verrouillage (I), l'unité de blocage (10) s'engage par un élément de blocage (11) dans la pièce structurelle (40) fonctionnellement essentielle et que,
dans la position de déverrouillage (II), ledit élément de blocage (11) de l'unité de blocage (10) est dissocié d'avec ladite pièce structurelle (40) fonctionnellement essentielle,
**caractérisé par le fait**
**que** l'élément de blocage (11) est guidé dans le guide (31) ménagé dans le carter, et l'espace intérieur dudit élément de blocage (11) est doté d'un guide (12) dans lequel est logé, avec mobilité, un élément d'accouplement (13) contraint élastiquement et relié à l'entraînement (20), ledit guide (12), ménagé dans l'élément de blocage (11), étant réalisé sous la forme d'un alésage de réception (12) qui reçoit l'intégralité dudit élément d'accouplement (13) à chaque emplacement (1, 2) occupé par ledit élément de blocage (11).

2. Dispositif selon la revendication 1,
**caractérisé par le fait**
**qu'**un élément élastique (14) placé à l'intérieur du guide (12) ménagé dans l'élément de blocage (11) est en contact avec l'élément d'accouplement (13), vers l'un des côtés, et avec ledit élément de blocage (11) vers l'autre côté.

3. Dispositif selon l'une des revendications précédentes,
**caractérisé par le fait**
**que** l'élément de blocage (11) est intégralement logé, de façon mobile, à l'intérieur du guide (31) ménagé dans le carter.

4. Dispositif selon l'une des revendications précédentes,
**caractérisé par le fait**
**que** l'élément de blocage (11) et l'élément d'accouplement (13) sont doués de mobilité l'un par rapport à l'autre.

5. Dispositif selon l'une des revendications précédentes,
**caractérisé par le fait**
**que** l'élément d'accouplement (13) est une pièce structurelle en matière plastique, notamment une pièce structurelle en une matière plastique renforcée par des fibres.

6. Dispositif selon l'une des revendications précédentes,
**caractérisé par le fait**
**qu'**il est prévu une unité de surveillance (3), qui détecte la position (I, II) occupée par l'unité de blocage (10) et/ou l'emplacement (1, 2) occupé par l'élément de blocage (11).

7. Dispositif selon l'une des revendications précédentes,
**caractérisé par le fait**
**que** l'entraînement (20) présente un organe de commande (21) apte à se mouvoir autour d'un axe de rotation (22), l'organe de commande (21) étant, en particulier, intérieurement muni d'au moins une surface de commande (23), l'unité de blocage (10) pouvant être déplacée vers la position de verrouillage (I) et vers la position de déverrouillage (II) le long de ladite surface de commande (23), ledit organe de commande (21) étant, en particulier, intérieurement pourvu d'une dépouille (24) dans laquelle l'élément de blocage (11) s'engage au moins en partie.

8. Dispositif selon l'une des revendications précédentes,
**caractérisé par le fait**
**que** l'élément d'accouplement (13) comporte une partie de liaison (15) guidée sur l'organe de commande (21).

9. Dispositif selon l'une des revendications précédentes,
**caractérisé par le fait**
**que** l'élément de blocage (11) présente une butée (16) contre laquelle l'élément d'accouplement (13) est en applique au cours du mouvement de l'unité de blocage (10), de la position de verrouillage (I) à la position de déverrouillage (II) ; et/ou par le fait que ledit élément de blocage (11) offre une réalisation du type cylindre.

10. Dispositif selon l'une des revendications précédentes,
**caractérisé par le fait**
**que** l'élément de blocage (11) comporte au moins un orifice (17) parcouru par l'élément d'accouplement (13), notamment par la partie de liaison (15).

11. Dispositif selon l'une des revendications précédentes,
**caractérisé par le fait**
**que** l'organe de commande (21) est extérieurement doté d'un côté menant (25), et intérieurement pourvu d'un côté mené (26), sachant notamment que ledit côté menant (25) comporte une denture (25), laquelle denture (25) est notamment en prise avec une roue à vis sans fin (27) d'un moteur électrique.

12. Dispositif selon l'une des revendications précédentes,
**caractérisé par le fait**
**que** la surface de commande (23) s'étend à la manière d'un filetage vis-à-vis de l'axe de rotation (22) de l'organe de commande (21), ladite surface de commande (23) présentant, en particulier, une configuration géométrique telle qu'un mode roue libre de l'entraînement puisse être obtenu dans la position de verrouillage (I) et/ou dans la position de déverrouillage (II).

13. Dispositif selon l'une des revendications précédentes,
**caractérisé par le fait**
**que** l'organe de commande (21) comprend deux surfaces de commande (23) ; et/ou par le fait que la partie de liaison (15) est une cheville métallique (15) qui traverse l'élément d'accouplement (13), fait respectivement saillie au-delà de l'orifice (17) de l'élément de blocage (11), par ses deux extrémités (15a, 15b), et porte contre la surface de commande (23).

14. Dispositif selon l'une des revendications précédentes,
**caractérisé par le fait**
**que** l'élément d'accouplement (13) comporte un bras (18) dépassant de l'élément de blocage (11) et coopérant avec l'unité de surveillance (3), laquelle unité de surveillance (3) se présente, en particulier, comme un élément de commutation électrique (3a) pouvant être activé par ledit bras (18).
